# EUROPÄISCHE PATENTSCHRIFT

(11) **EP 2 288 529 B1**
(45) Veröffentlichungstag und Bekanntmachung des Hinweises auf die Patenterteilung: **17.10.2012**
(21) Anmeldenummer: 09761647.8
(22) Anmeldetag: 03.06.2009
(51) Int. Cl.: B61L 3/12, B61L 23/00, B61B 1/02

(54) **DATENÜBERTRAGUNGSSYSTEM**
DATA TRANSMISSION SYSTEM
SYSTÈME DE TRANSMISSION DE DONNÉES

(30) Priorität: 10.06.2008 DE 102008028020
(43) Veröffentlichungstag der Anmeldung: 02.03.2011
(73) Patentinhaber: Siemens Aktiengesellschaft, 80333 München (DE)
(72) Erfinder: KISTER, Andreas, 79541 Lörrach (DE); SEIFERT, Matthias, 38126 Braunschweig (DE)
(86) Internationale Anmeldenummer: PCT/EP2009/056809
(87) Internationale Veröffentlichungsnummer: WO 2009/150084

(56) Entgegenhaltungen:
- EP-A1- 0 890 496
- EP-A1- 1 386 813
- EP-A1- 1 759 954
- WO-A1-2007/107747
- WO-A1-2009/013167
- US-A- 1 376 849
- FESER T; ET AL: "SICHERHEIT AN DER BAHNSTEIGKANTE//SAFETY AT THE EDGE OF PLATFORM" ZEVRAIL - GLASERS ANNALEN, GEORG SIEMENS VERLAG, BERLIN, DE, Bd. 129, 1. November 2005 (2005-11-01), Seiten 226-235, XP001237177 ISSN: 1618-8330

## Beschreibung

Die Erfindung bezieht sich auf ein Datenübertragungssystem für eine Datenübertragung zwischen einem Schienenfahrzeug und einer streckenseitigen Einrichtung mit den Merkmalen gemäß dem Oberbegriff des Anspruchs 1.

Datenübertragungssysteme sind beispielsweise von U-Bahnen und S-Bahnen bekannt. Sie weisen eine streckenseitige Sende- und/oder Empfangseinrichtung sowie eine fahrzeugseitige Sende- und/oder Empfangseinrichtung auf und dienen dazu, Daten zwischen dem Schienenfahrzeug und der Strecke zu übermitteln. Beispielsweise werden Videoüberwachungssignale vom Schienenfahrzeug zur Strecke übermittelt, damit im Rahmen einer streckenseitigen Überwachung des Schienenfahrzeugs festgestellt werden kann, wenn eine Problemsituation vorliegt. Beispielsweise kann streckenseitig die Polizei informiert werden, wenn die Videodaten zeigen, dass es innerhalb des Schienenfahrzeugs zu Gewalthandlungen kommt. Auch kann beispielsweise die Feuerwehr informiert werden, wenn eine Brandentwicklung innerhalb des Schienenfahrzeugs erkennbar wird.

Ein Datenübertragungssystem mit den Merkmalen gemäß dem Oberbegriff des Patentanspruchs 1 ist aus der internationalen Patentanmeldung mit der Veröffentlichungsnummer WO 2007/107747 A1 bekannt. Dieses Datenübertragungssystem umfasst eine streckenseitige Sende- und/oder Empfangseinrichtung sowie eine fahrzeugseitige Sende- und/oder Empfangseinrichtung, wobei die fahrzeugseitige Sende- und/oder Empfangseinrichtung mindestens ein fahrzeugseitiges Sende- und/oder Empfangselement in Form eines Transceivers aufweist, der außen am Fahrzeug angebracht ist.

Der Erfindung liegt die Aufgabe zugrunde, ein Datenübertragungssystem anzugeben, das eine besonders zuverlässige Übermittlung von Daten zwischen dem Schienenfahrzeug und der Strecke und/oder umgekehrt von der Strecke zum Schienenfahrzeug ermöglicht.

Diese Aufgabe wird erfindungsgemäß durch ein Datenübertragungssystem mit den Merkmalen gemäß Patentanspruch 1 gelöst. Vorteilhafte Ausgestaltungen des erfindungsgemäßen Datenübertragungssystems sind in Unteransprüchen angegeben.

Danach ist erfindungsgemäß vorgesehen, dass die fahrzeugseitige Sende- und/oder Empfangseinrichtung mindestens ein fahrzeugseitiges Sende- und/oder Empfangselement aufweist, das im Bereich einer Schienenfahrzeugtür angebracht und im geschlossenen Zustand der Schienenfahrzeugtür durch diese abgedeckt und von der Schienenstrecke getrennt wird und bei geöffneter Schienenfahrzeugtür von dieser unverdeckt bleibt.

Ein wesentlicher Vorteil des erfindungsgemäßen Datenübertragungssystems ist darin zu sehen, dass eine Gefährdung des Datenverkehrs zwischen Schienenfahrzeug und Strecke aufgrund einer Verschmutzung des schienenfahrzeugseitigen Sende- und/oder Empfangselements vermieden wird. Aufgrund der erfindungsgemäß vorgesehenen Abdeckung des fahrzeugseitigen Sende- und/oder Empfangselementes durch die Schienenfahrzeugtür ist sichergestellt, dass während der Fahrt des Schienenfahrzeugs keine Verschmutzung des Sende- und/oder Empfangselements auftreten kann. Erst wenn das Schienenfahrzeug steht und die Schienenfahrzeugtür geöffnet wird, wird das fahrzeugseitige Sende- und/oder Empfangselement freigelegt und kann zum Senden oder Empfangen eingesetzt werden. Während des Stillstands des Schienenfahrzeugs ist die Verschmutzungsgefahr deutlich herabgesetzt, so dass ein Ausfall der Datenübertragung wegen Verschmutzung deutlich geringer ist als bei herkömmlichen Datenübertragungssystemen, bei denen fahrzeugseitige Sende- und/oder Empfangselemente stets der Schienenstrecke ausgesetzt sind.

Um eine Sensorverschmutzung zu vermeiden, wird es analog als vorteilhaft angesehen, wenn mindestens ein streckenseitiges Sende- und/oder Empfangselement einer streckenseitigen Sende- und/oder Empfangseinrichtung derart im Bereich einer Bahnsteigschutztür angeordnet ist, dass es bei geschlossener Bahnsteigschutztür durch diese abgedeckt und von der Schienenstrecke getrennt wird und bei geöffneter Bahnsteigschutztür von der Bahnsteigschutztür unverdeckt bleibt.

Vorzugsweise werden das streckenseitige Sende- und/oder Empfangselement und das fahrzeugseitige Sende- und/oder Empfangselement derart angeordnet, dass bei einer Positionierung der Schienenfahrzeugtür vor der Bahnsteigschutztür zwischen den beiden Sende- und/oder Empfangselementen eine Datenübertragung möglich ist. Beispielsweise sind das streckenseitige Sende- und/oder Empfangselement und das fahrzeugseitige Sende- und/oder Empfangselement derart angeordnet, dass bei einer Positionierung der Schienenfahrzeugtür vor der Bahnsteigschutztür die beiden Sende- und/oder Empfangselemente einander gegenüberliegen.

Um eine möglichst hohe Datenübertragungsrate zu ermöglichen, wird es als vorteilhaft angesehen, wenn die fahrzeugseitige und die streckenseitige Sende- und/oder Empfangseinrichtung mindestens jeweils zwei oder mehr Sende- und/oder Empfangselemente aufweisen und diese parallel betrieben werden.

Vorzugsweise weisen die fahrzeugseitige und die streckenseitige Sende- und/oder Empfangseinrichtung mindestens jeweils zwei oder mehr Sende- und/oder Empfangselemente auf, die derart angeordnet sind, dass sie sich bei einer Positionierung der Schienenfahrzeugtür vor der Bahnsteigschutztür paarweise gegenüber liegen.

Die Erfindung bezieht sich darüber hinaus auf ein Schienenfahrzeug mit einer fahrzeugseitigen Sende- und/oder Empfangseinrichtung.

Um bei einem solchen Schienenfahrzeug zu vermeiden, dass Schmutzeffekte eine sichere Datenübertragung zwischen Schienenfahrzeug und Strecke verhindern oder zumindest erschweren können, ist erfindungsgemäß vorgesehen, dass die fahrzeugseitige Sende- und/oder Empfangseinrichtung mindestens ein fahrzeugseitiges Sende- und/oder Empfangselement aufweist, das im Bereich einer Schienenfahrzeugtür angebracht ist und im geschlossenen Zustand der Schienenfahrzeugtür durch diese abgedeckt und von der Schienenstrecke getrennt wird und bei geöffneter Schienenfahrzeugtür von dieser unverdeckt bleibt.

Vorteilhafte Ausgestaltungen des erfindungsgemäßen Schienenfahrzeugs sind in Unteransprüchen angegeben. Bezüglich der Vorteile des erfindungsgemäßen Schienenfahrzeugs sei auf die obigen Ausführungen im Zusammenhang mit dem erfindungsgemäßen Datenübertragungssystem verwiesen.

Um eine Videoüberwachung des Schienenfahrzeugs zu ermöglichen, wird es als vorteilhaft angesehen, wenn das Schienenfahrzeug ein mit der fahrzeugseitigen Sende- und/oder Empfangseinrichtung verbundenes Videoüberwachungssystem aufweist, das Videodaten erzeugt und diese zwischenspeichert, und die fahrzeugseitige Sende- und/oder Empfangseinrichtung derart ausgestaltet ist, dass sie bei einem Halt an einem Bahnsteig die zwischenspeicherten Videodaten an eine streckenseitige Sende- und/oder Empfangseinrichtung überträgt. Die Erfindung bezieht sich darüber hinaus auf eine Anordnung mit mindestens einer streckenseitigen Sende- und/oder Empfangseinrichtung und mit mindestens einer Bahnsteigschutztür.

Um bei einer solchen Anordnung zu vermeiden, dass Schmutz die Übertragungsqualität bei der Übertragung von Daten zwischen Schienenfahrzeug und Strecke bzw. umgekehrt erschwert, ist erfindungsgemäß vorgesehen, dass die streckenseitige Sende- und/oder Empfangseinrichtung mindestens ein streckenseitiges Sende- und/oder Empfangselement aufweist, das relativ zur Bahnsteigschutztür derart angeordnet ist, dass es bei geschlossener Bahnsteigschutztür durch diese abgedeckt und von der Schienenstrecke getrennt wird und bei geöffneter Bahnsteigschutztür von der Bahnsteigschutztür unverdeckt bleibt.

Bezüglich der Vorteile der erfindungsgemäßen Anordnung sei auf die obigen Ausführungen im Zusammenhang mit dem erfindungsgemäßen Datenübertragungssystem verwiesen. Vorteilhafte Ausgestaltungen der erfindungsgemäßen Anordnung sind in Unteransprüchen angegeben.

Die Erfindung bezieht sich darüber hinaus auf ein Verfahren zum Übertragen von Daten von einem Schienenfahrzeug zu einer streckenseitigen Einrichtung und umgekehrt.

Um bei einem solchen Verfahren zu erreichen, dass die zum Senden und/oder Empfangen eingesetzten Sende- und/oder Empfangselemente weniger schnell als bisher verschmutzen können, ist erfindungsgemäß vorgesehen, dass das Schienenfahrzeug derart an einem Bahnsteig angehalten wird, das sich mindestens eine Schienenfahrzeugtür vor einer Bahnsteigschutztür befindet, mindestens ein bei geschlossener Schienenfahrzeugtür durch diese verdecktes fahrzeugseitiges Sende- und/oder Empfangselement durch ein Öffnen der Schienenfahrzeugtür freigegeben wird, mindestens ein bei geschlossener Bahnsteigschutztür durch diese verdecktes streckenseitiges Sende- und/oder Empfangselement durch ein Öffnen der Bahnsteigschutztür freigegeben wird und zwischen den beiden freigegebenen Sende- und/oder Empfangselementen Daten uni- oder bidirektional übertragen werden.

Bezüglich der Vorteile des erfindungsgemäßen Verfahrens sei auf die obigen Ausführungen im Zusammenhang mit dem erfindungsgemäßen Datenübertragungssystem verwiesen, da sich die Vorteile im Wesentlichen entsprechen.

Vorzugsweise werden im Rahmen des Verfahrens im Schienenfahrzeug zwischengespeicherte Videodaten von dem fahrzeugseitigen Sende- und/oder Empfangselement zu dem streckenseitigen Sende- und/oder Empfangselement übertragen.

Die Erfindung wird nachfolgend anhand von Ausführungsbeispielen näher erläutert; dabei zeigen beispielhaft
- Figur 1: ein Ausführungsbeispiel für ein erfindungsgemäßes Schienenfahrzeug, dessen Schienenfahrzeugtür geschlossen ist;
- Figur 2: das Schienenfahrzeug gemäß Figur 1 mit halboffener Schienenfahrzeugtür;
- Figur 3: das Schienenfahrzeug gemäß Figur 1 mit offener Schienenfahrzeugtür;
- Figur 4: ein Ausführungsbeispiel für eine Anordnung mit einer Bahnsteigschutztür und mit einer streckenseitigen Sende- und/oder Empfangseinrichtung, wobei bei der Darstellung gemäß Figur 4 die Bahnsteigschutztür geschlossen ist;
- Figur 5: die Anordnung gemäß Figur 4 mit halboffener Bahnsteigschutztür;
- Figur 6: die Anordnung gemäß Figur 4 mit offener Bahnsteigschutztür;
- Figur 7: ein Ausführungsbeispiel für ein erfindungsgemäßes Datenübertragungssystem mit einem Schienenfahrzeug, das in einen Bahnhofsbereich einfährt,
- Figur 8: das Datenübertragungssystem gemäß Figur 7, wobei das Schienenfahrzeug vor einer Bahnsteigschutztür angehalten hat, und
- Figur 9: das Schienenfahrzeug vor der Bahnsteigschutztür mit geöffneten Türen.

In den Figuren werden der Übersicht halber für identische oder vergleichbare Komponenten stets dieselben Bezugszeichen verwendet.

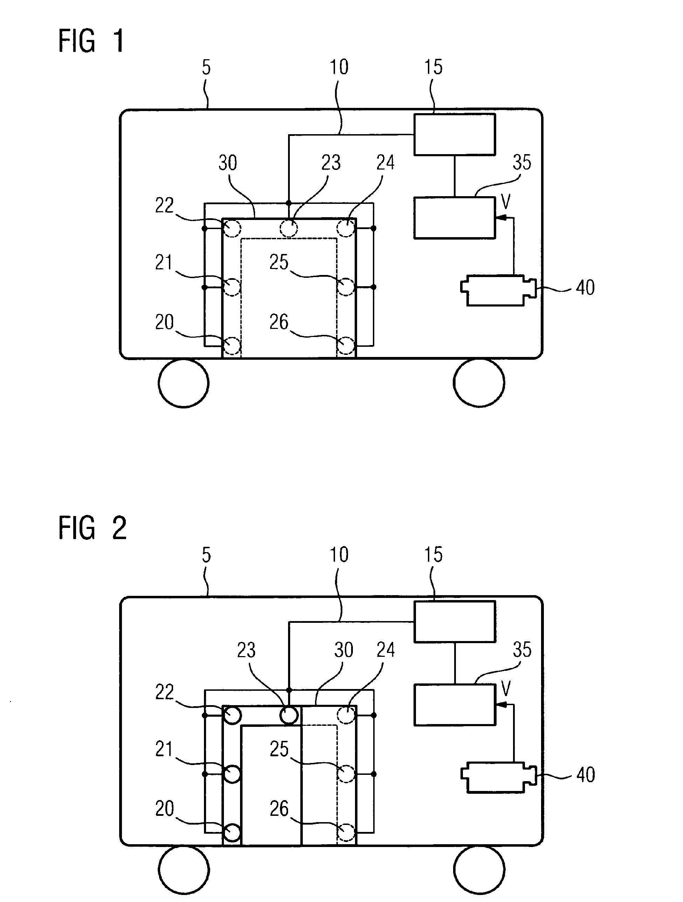

In der Figur 1 ist ein Schienenfahrzeug 5 dargestellt, das mit einer fahrzeugseitigen Sende- und/oder Empfangseinrichtung 10 ausgestattet ist. Die fahrzeugseitige Sende- und/oder Empfangseinrichtung 10 umfasst eine fahrzeugseitige Steuereinrichtung 15 sowie fahrzeugseitige Sende- und/oder Empfangselemente 20 bis 26, die im Bereich einer Schienenfahrzeugtür 30 des Schienenfahrzeugs 5 angeordnet sind.

Die Anordnung der fahrzeugseitigen Sende- und/oder Empfangselemente 20 bis 26 ist derart gewählt, dass diese bei geschlossener Schienenfahrzeugtür 30 von dieser abgedeckt werden. In der Figur 1 ist die Schienenfahrzeugtür 30 geschlossen, so dass die fahrzeugseitigen Sende- und/oder Empfangselemente 20 bis 26 abgedeckt und von der Schienenstrecke getrennt werden; um dies zeichnerisch zu verdeutlichen, sind die fahrzeugseitigen Sende- und/oder Empfangselemente 20 bis 26 mit gestrichelten Linien dargestellt.

Die Schienenfahrzeugtür 30 schützt somit die fahrzeugseitigen Sende- und/oder Empfangselemente 20 bis 26 vor einer Verschmutzung, die von der Schienenstrecke ausgeht. So kann beispielsweise während der Fahrt des Schienenfahrzeugs 5 Schmutz und Staub von der Schienenstrecke aufgewirbelt werden, der die fahrzeugseitigen Sende- und/oder Empfangselemente 20 bis 26 verschmutzen könnte. Dies wird jedoch durch die Schienenfahrzeugtür 30 verhindert, da diese eine Abdeckung vor der Schienenstrecke bewirkt.

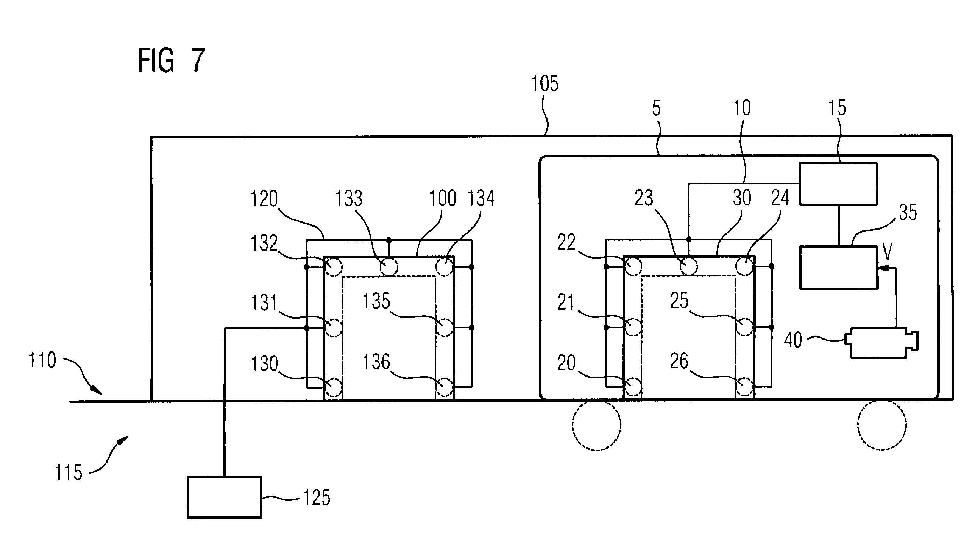

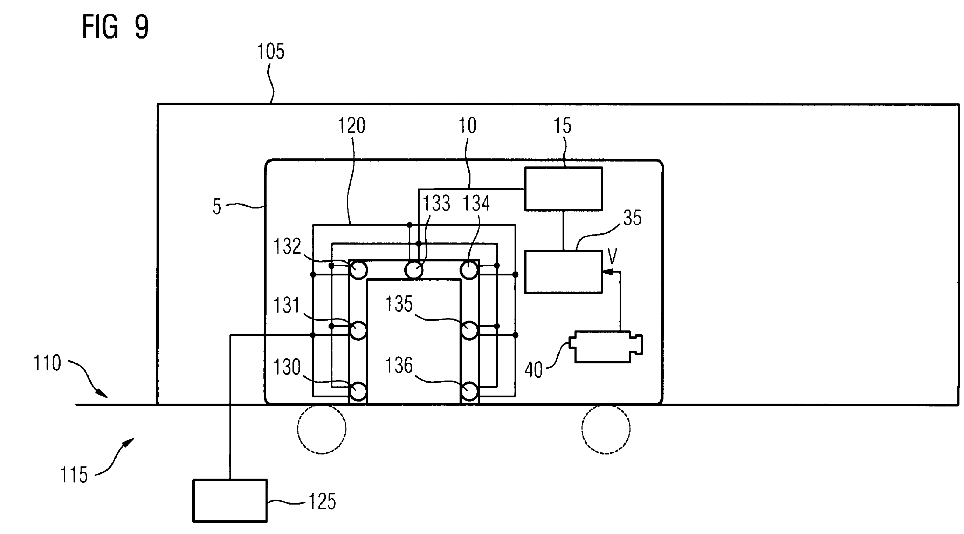

An die fahrzeugseitige Steuereinrichtung 15 der fahrzeugseitigen Sende- und/oder Empfangseinrichtung 10 ist ein Videoüberwachungssystem 35 angeschlossen, das mit einer Kamera 40 in Verbindung steht. Videodaten V der Kamera 40 werden von dem Videoüberwachungssystem 35 zwischengespeichert und über die fahrzeugseitige Sende- und/oder Empfangseinrichtung 10 zu einer streckenseitigen Sende- und/oder Empfangseinrichtung übertragen. Dies wird weiter unten im Zusammenhang mit den Figuren 7 bis 9 noch näher erläutert.

In der Figur 2 ist das Schienenfahrzeug 10 gemäß Figur 1 dargestellt, nachdem die Schienenfahrzeugtür 30 zu ungefähr 2/3 geöffnet wurde. Man erkennt, dass die fahrzeugseitigen Sende- und/oder Empfangselemente 20, 21, 22 und 23 nun nicht mehr von der Schienenfahrzeugtür 30 abgedeckt werden. Demgemäß sind diese Sende- und/oder Empfangselemente 20 bis 23 nun mit durchgehenden Linien dargestellt, und nicht mehr mit gestrichelten Linien. Die fahrzeugseitigen Sende- und/oder Empfangselemente 24 bis 26 hingegen bleiben weiterhin von der Schienenfahrzeugtür 30 abgedeckt, so dass diese weiterhin mit gestrichelten Linien gekennzeichnet sind.

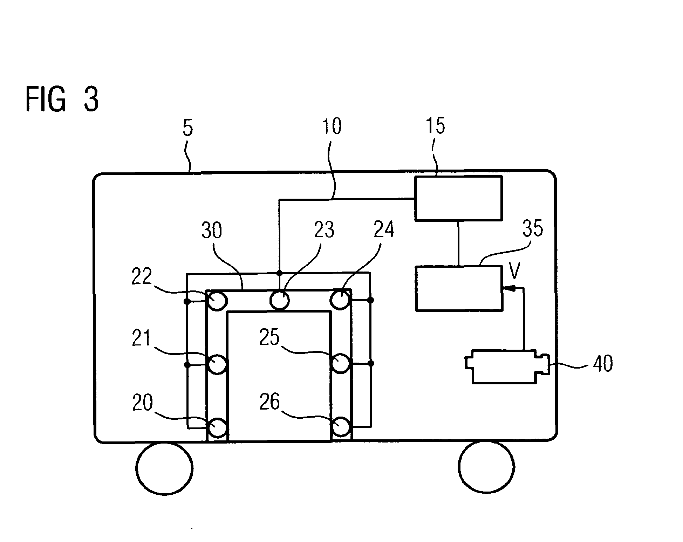

In der Figur 3 ist das Schienenfahrzeug 5 gemäß Figur 1 dargestellt, nachdem die Schienenfahrzeugtür 30 vollständig geöffnet worden ist. Man erkennt, dass nunmehr alle sieben fahrzeugseitigen Sende- und/oder Empfangselemente 20 bis 26 frei liegen und sichtbar sind. Demgemäß sind sie nun mit durchgehenden Linien gekennzeichnet.

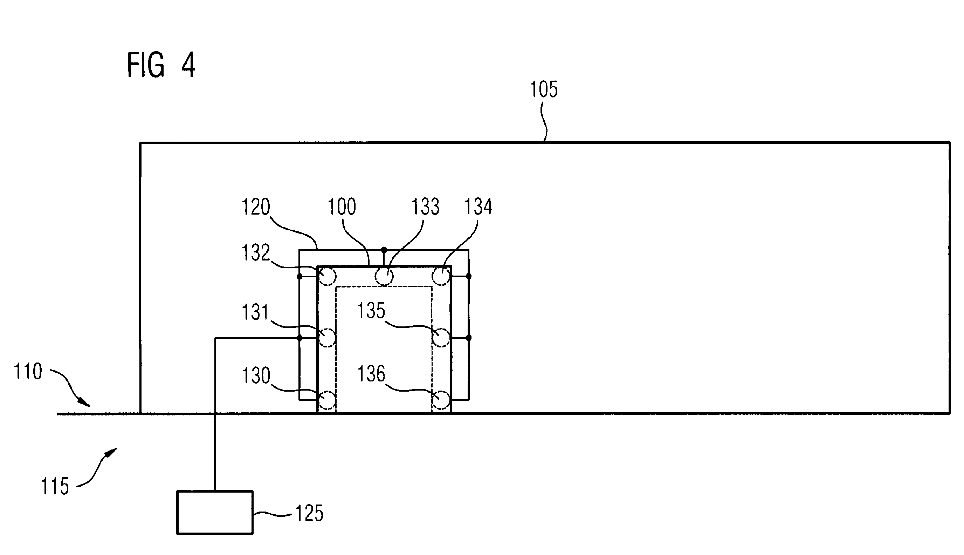

In der Figur 4 ist ein Ausführungsbeispiel für eine Anordnung mit einer Bahnsteigschutztür 100 gezeigt. Die Bahnsteigschutztür 100 gehört zu einer Bahnsteigschutzwand 105, die in einem nicht weiter gezeichneten Bahnhof die Schienenstrecke 110 von dem Bahnsteigbereich 115 räumlich trennt, so dass Passagiere nicht vom Bahnsteigbereich 115 auf die Schienenstrecke 110 fallen können. Die Bahnsteigschutztür 100 ist vorzugsweise stets verschlossen, es sei denn, dass ein Schienenfahrzeug derart vor der Bahnsteigschutztür 100 positioniert ist, dass Passagiere von dem Bahnsteigbereich 115 in das Schienenfahrzeug ein- bzw. aus diesem aussteigen können. Die Bahnsteigschutztür 100 wird also vorzugsweise nur zum Einsteigen in Schienenfahrzeuge bzw. Aussteigen aus Schienenfahrzeugen geöffnet.

In der Figur 4 erkennt man darüber hinaus eine streckenseitige Sende- und/oder Empfangseinrichtung 120, die eine streckenseitige Steuereinrichtung 125 sowie streckenseitige Sende- und/oder Empfangselemente 130 bis 136 umfasst.

Die streckenseitigen Sende- und/oder Empfangselemente 130 bis 136 sind im Bereich der Bahnsteigschutztür 100 derart angeordnet, dass sie von der Bahnsteigschutztür 100 abgedeckt und von der Schienenstrecke 110 getrennt werden, wenn die Bahnsteigschutztür 100 verschlossen ist. Die Bahnsteigschutztür 100 schützt somit die streckenseitigen Sende- und/oder Empfangselemente 130 bis 136 vor einer Verschmutzung, die von der Schienenstrecke 110 ausgeht. So kann beispielsweise beim Ein- und Ausfahren von Schienenfahrzeugen in den Bahnhof Schmutz und Staub von der Schienenstrecke 110 aufgewirbelt werden, der die streckenseitigen Sende- und/oder Empfangselemente 130 bis 136 verschmutzen könnte. Dies wird jedoch durch die Bahnsteigschutztür 100 verhindert, da diese eine Abdeckung vor der Schienenstrecke 110 bewirkt.

Bei der Darstellung gemäß Figur 4 ist die Bahnsteigschutztür 100 geschlossen, so dass die streckenseitigen Sende- und/oder Empfangselemente 130 bis 136 abgedeckt werden; demgemäß sind diese nur mit gestrichelten Linien dargestellt.

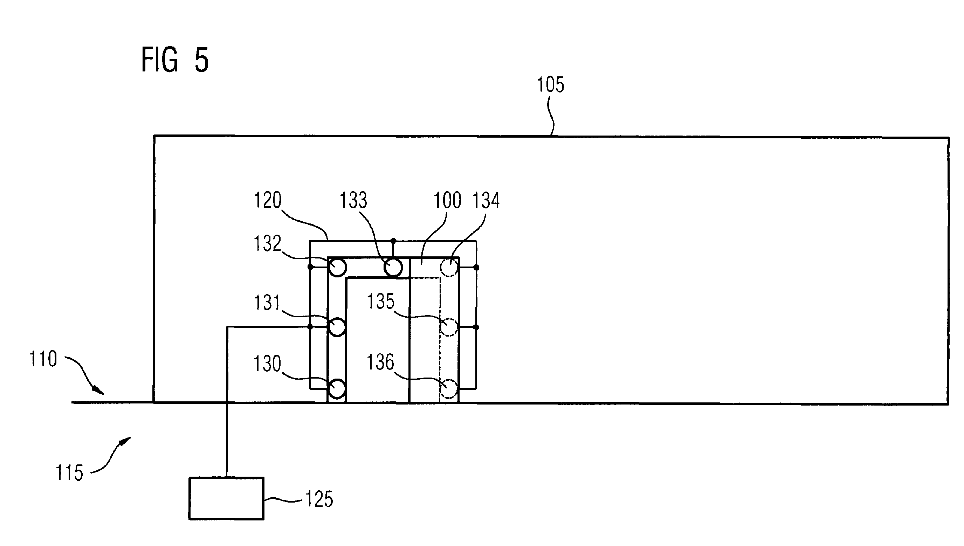

In der Figur 5 ist die Bahnsteigschutztür gezeigt, nachdem sie zu ca. zwei Dritteln geöffnet worden ist. Man erkennt, dass nunmehr die Sende- und/oder Empfangselemente 130 bis 133 nicht mehr von der Bahnsteigschutztür 100 abgedeckt werden; demgemäß sind sie nun mit durchgehenden Linien gekennzeichnet. Die Sende- und/oder Empfangselemente 134 bis 136 bleiben bei dieser Position der Bahnsteigschutztür 100 noch von dieser abgedeckt, so dass diese mit gestrichelten Linien gekennzeichnet sind.

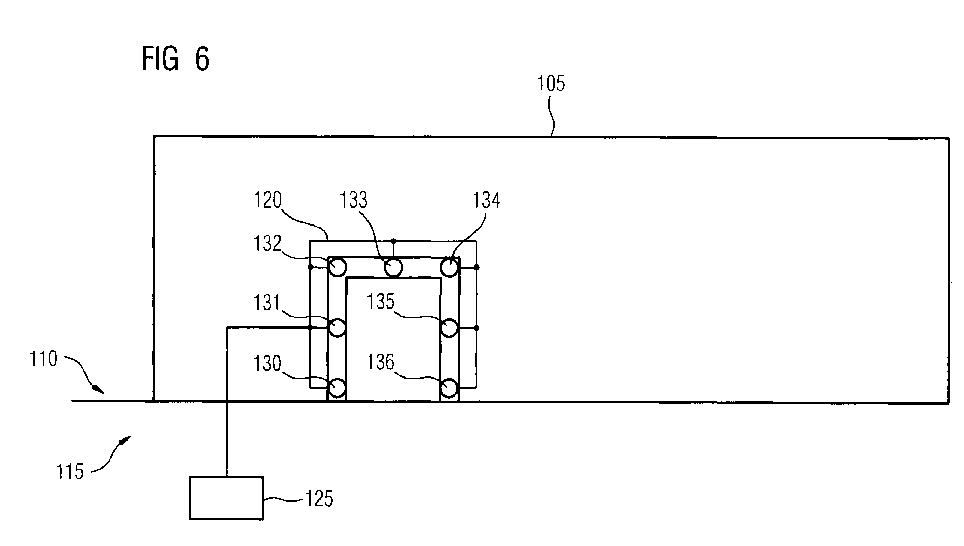

In der Darstellung gemäß Figur 6 ist die Bahnsteigschutztür 100 vollständig geöffnet. Man erkennt, dass die streckenseitigen Sende- und/oder Empfangselemente 130 bis 136 nun komplett freiliegen und zum Senden und/oder Empfangen mit fahrzeugseitigen Sende- und/oder Empfangselementen bereit sind bzw. zur Verfügung stehen.

In der Figur 7 ist ein Ausführungsbeispiel für ein Datenübertragungssystem dargestellt, das eine fahrzeugseitige Sende- und/oder Empfangseinrichtung 10 sowie eine streckenseitige Sende- und/oder Empfangseinrichtung 120 umfasst. Bei der Darstellung gemäß Figur 7 fährt das Schienenfahrzeug 5 in den Bahnhofsbereich ein, so dass sowohl die Schienenfahrzeugtür 30 als auch die Bahnsteigschutztür 100 noch verschlossen sind. Demgemäß werden die fahrzeugseitigen Sende- und/oder Empfangselemente 20 bis 26 noch von der Schienenfahrzeugtür 30 abgedeckt; in entsprechender Weise deckt die Bahnsteigschutztür 100 die streckenseitigen Sende- und/oder Empfangselemente 130 bis 136 ab.

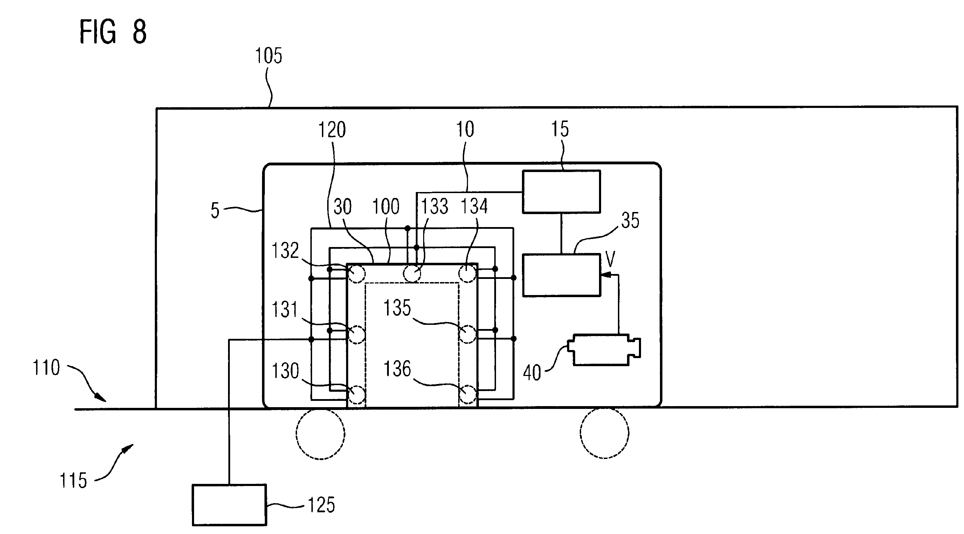

Bei der Darstellung gemäß Figur 8 ist das Schienenfahrzeug 5 derart vor der Bahnsteigschutzwand 105 positioniert, dass die Schienenfahrzeugtür 30 hinter der Bahnsteigschutztür 100 positioniert ist. Vorzugsweise ist die Positionierung derart gewählt, dass sich die fahrzeugseitigen Sende- und/oder Empfangselemente 20 bis 26 und die streckenseitigen Sende- und/oder Empfangselemente 130 bis 136 paarweise gegenüberliegen. Bei der Darstellung gemäß Figur 8 sind die Bahnsteigschutztür 100 sowie die Schienenfahrzeugtür 30 noch geschlossen.

Nachdem das Schienenfahrzeug 5 zum Stillstand gekommen ist, werden die Bahnsteigschutztür 100 sowie die Schienenfahrzeugtür 30 geöffnet, so dass die streckenseitigen Sende- und/oder Empfangselemente sowie die fahrzeugseitigen Sende- und/oder Empfangselemente freigelegt werden und sich paarweise derart gegenüberliegen, dass nunmehr eine unidirektionale oder bidirektionale Datenübertragung möglich ist.

Das Datenübertragungssystem gemäß den Figuren 7 bis 9 kann beispielsweise derart betrieben werden, dass mit der Kamera 40 des Schienenfahrzeugs 5 während der Fahrt des Schienenfahrzeugs Videodaten V aufgenommen werden, die sich auf das Fahrzeuginnere des Schienenfahrzeugs 5 oder auf die Strecke, auf der das Schienenfahrzeug 5 fährt, beziehen. Die Videodaten V werden zu dem Videoüberwachungssystem 35 übertragen und dort zwischengespeichert, bis das Schienenfahrzeug 5 in den jeweils nächsten Bahnhofsbereich eingefahren ist und eine Datenübertragung mit der dortigen streckenseitigen Sende- und/oder Empfangseinrichtung 120 möglich ist.

Sobald das Schienenfahrzeug 5 vor der Bahnsteigschutztür 100 positioniert worden ist und die Schienenfahrzeugtür 30 und die Bahnsteigschutztür 100 geöffnet worden sind, beginnt das Videoüberwachungssystem 35, die zwischengespeicherten Videodaten V über die fahrzeugseitige Steuereinrichtung 15 sowie die fahrzeugseitigen Sende- und/oder Empfangselemente 20 bis 26 zu den streckenseitigen Sende- und/oder Empfangselementen 130 bis 136 sowie damit einhergehend zu der streckenseitigen Sende- und/oder Empfangseinrichtung 120 zu übertragen.

Um eine hohe Datenübertragung zu erreichen, werden die Videodaten V vorzugsweise parallel übertragen, wobei die Daten auf die insgesamt sieben paarweise gegenüberliegenden Sende- und/oder Empfangselemente 20 bis 26 bzw. 130 bis 136 aufgesplittet und über die jeweils zugeordneten Sende- und/oder Empfangselementpaare übertragen werden.

Bei den Sende- und/oder Empfangselementen 20 bis 26 bzw. 130 bis 136 kann es sich beispielsweise um Elemente handeln, die elektromagnetische Strahlung senden und/oder empfangen können. Beispielsweise wird zwischen den Sende- und/oder Empfangselementen Infrarotstrahlung oder Radarstrahlung zur Datenübermittlung übertragen.

## Patentansprüche

1. Datenübertragungssystem mit
- einer streckenseitigen Sende- und/oder Empfangseinrichtung (120) und
- einer fahrzeugseitigen Sende- und/oder Empfangseinrichtung (10),
- wobei die fahrzeugseitige Sende- und/oder Empfangseinrichtung mindestens ein fahrzeugseitiges Sende- und/oder Empfangselement (20-26) aufweist, das im Bereich einer Schienenfahrzeugtür (30) angebracht ist,
**dadurch gekennzeichnet, dass** das fahrzeugseitige Sende- und/oder Empfangselement derart angebracht ist, dass es im geschlossenen Zustand der Schienenfahrzeugtür durch diese abgedeckt und von der Schienenstrecke (110) getrennt wird und bei geöffneter Schienenfahrzeugtür von dieser unverdeckt bleibt.

2. Datenübertragungssystem, insbesondere nach Anspruch 1, mit einer streckenseitigen und einer fahrzeugseitigen Sende- und/oder Empfangseinrichtung,
**dadurch gekennzeichnet, dass** die streckenseitige Sende- und/oder Empfangseinrichtung (120) mindestens ein streckenseitiges Sende- und/oder Empfangselement (130-136) aufweist, das im Bereich einer Bahnsteigschutztür (100) derart angeordnet ist, dass es bei geschlossener Bahnsteigschutztür durch diese abgedeckt und von der Schienenstrecke (110) getrennt wird und bei geöffneter Bahnsteigschutztür von der Bahnsteigschutztür unverdeckt bleibt.

3. Datenübertragungssystem nach Anspruch 2,
**dadurch gekennzeichnet, dass** das streckenseitige Sende- und/oder Empfangselement und das fahrzeugseitige Sende- und/oder Empfangselement derart angeordnet sind, dass bei einer Positionierung der Schienenfahrzeugtür vor der Bahnsteigschutztür zwischen den beiden Sende- und/oder Empfangselementen eine Datenübertragung möglich ist.

4. Datenübertragungssystem nach Anspruch 2 oder 3,
**dadurch gekennzeichnet, dass** das streckenseitige Sende- und/oder Empfangselement und das fahrzeugseitige Sende- und/oder Empfangselement derart angeordnet sind, dass bei einer Positionierung der Schienenfahrzeugtür vor der Bahnsteigschutztür die beiden Sende- und/oder Empfangselemente einander gegenüberliegen.

5. Datenübertragungssystem nach einem der voranstehenden Ansprüche,
**dadurch gekennzeichnet, dass** die fahrzeugseitige und die streckenseitige Sende- und/oder Empfangseinrichtung mindestens jeweils zwei oder mehr Sende- und/oder Empfangselemente aufweisen, die parallel betrieben werden.

6. Datenübertragungssystem nach einem der voranstehenden Ansprüche,
**dadurch gekennzeichnet , dass** die fahrzeugseitige und die streckenseitige Sende- und/oder Empfangseinrichtung mindestens jeweils zwei oder mehr Sende- und/oder Empfangselemente aufweisen, die derart angeordnet sind, dass sie sich bei einer Positionierung der Schienenfahrzeugtür vor der Bahnsteigschutztür paarweise gegenüber liegen.

7. Schienenfahrzeug (5) mit einer fahrzeugseitigen Sende- und/oder Empfangseinrichtung (10), wobei die fahrzeugseitige Sende- und/oder Empfangseinrichtung mindestens ein fahrzeugseitiges Sende- und/oder Empfangselement (20-26) aufweist, das im Bereich einer Schienenfahrzeugtür (30) angebracht ist,
**dadurch gekennzeichnet , dass** das fahrzeugseitige Sende- und/oder Empfangselement derart angebracht ist, dass es im geschlossenen Zustand der Schienenfahrzeugtür durch diese abgedeckt und von der Schienenstrecke getrennt wird und bei geöffneter Schienenfahrzeugtür von dieser unverdeckt bleibt.

8. Schienenfahrzeug nach Anspruch 7,
**dadurch gekennzeichnet, dass**
- das Schienenfahrzeug ein mit der fahrzeugseitigen Sende- und/oder Empfangseinrichtung verbundenes Videoüberwachungssystem (35) aufweist, das Videodaten (V) erzeugt und diese zwischenspeichert, und
- die fahrzeugseitige Sende- und/oder Empfangseinrichtung derart ausgestaltet ist, dass sie bei einem Halt an einem Bahnsteig die zwischenspeicherten Videodaten an eine streckenseitige Sende- und/oder Empfangseinrichtung überträgt.

9. Anordnung mit mindestens einer streckenseitigen Sende- und/oder Empfangseinrichtung (120) und mit mindestens einer Bahnsteigschutztür (100),
**dadurch gekennzeichnet, dass** die streckenseitige Sende- und/oder Empfangseinrichtung mindestens ein streckenseitiges Sende- und/oder Empfangselement (130-136) aufweist, das relativ zur Bahnsteigschutztür (100) derart angeordnet ist, dass es bei geschlossener Bahnsteigschutztür durch diese abgedeckt und von der Schienenstrecke getrennt wird und bei geöffneter Bahnsteigschutztür von der Bahnsteigschutztür unverdeckt bleibt.

10. Verfahren zum Übertragen von Daten von einem Schienenfahrzeug zu einer streckenseitigen Einrichtung und/oder umgekehrt,
**dadurch gekennzeichnet, dass**
- das Schienenfahrzeug derart an einem Bahnsteig angehalten wird, das sich mindestens eine Schienenfahrzeugtür vor einer Bahnsteigschutztür befindet,
- mindestens ein bei geschlossener Schienenfahrzeugtür durch diese verdecktes fahrzeugseitiges Sende- und/oder Empfangselement durch ein Öffnen der Schienenfahrzeugtür freigegeben wird,
- mindestens ein bei geschlossener Bahnsteigschutztür durch diese verdecktes streckenseitiges Sende- und/oder Empfangselement durch ein Öffnen der Bahnsteigschutztür freigegeben wird und
- zwischen den beiden freigegebenen Sende- und/oder Empfangselementen Daten uni- oder bidirektional übertragen werden.

11. Verfahren nach Anspruch 10,
**dadurch gekennzeichnet, dass** in dem Schienenfahrzeug erzeugte und zwischengespeicherte Videodaten (V) von dem fahrzeugseitigen Sende- und/oder Empfangselement zu dem streckenseitigen Sende- und/oder Empfangselement übertragen werden.

## Claims

1. Data transmission system having
- a trackside transmitting and/or receiving device (120) and
- a vehicle-side transmitting and/or receiving device (10),
- with the vehicle-side transmitting and/or receiving device having at least one vehicle-side transmitting and/or receiving element (20-26) which is fitted in the area of a rail vehicle door (30),
**characterized in that** the vehicle-side transmitting and/or receiving device is fitted such that it is covered by the rail vehicle door and is separated from the rail track (110) when the door is in the closed state, and is not covered by the rail vehicle door when the rail vehicle door is open.

2. Data transmission system, in particular according to Claim 1, having a trackside and a vehicle-side transmitting and/or receiving device, **characterized in that** the trackside transmitting and/or receiving device (120) has at least one trackside transmitting and/or receiving element (130-136) which is arranged in the area of a platform protection door (100) such that it is covered by the platform protection door, and is separated from the rail track (110), when the platform protection door is closed, and remains uncovered by the platform protection door when the platform protection door is open.

3. Data transmission system according to Claim 2, **characterized in that** the trackside transmitting and/or receiving element and the vehicle-side transmitting and/or receiving element are arranged such that, when the rail vehicle door is positioned in front of the platform protection door, data transmission is possible between the two transmitting and/or receiving elements.

4. Data transmission system according to Claim 2 or 3, **characterized in that** the trackside transmitting and/or receiving element and the vehicle-side transmitting and/or receiving element are arranged such that the two transmitting and/or receiving elements are opposite one another when the rail vehicle door is positioned in front of the platform protection door.

5. Data transmission system according to one of the preceding claims, **characterized in that** the vehicle-side and the trackside transmitting and/or receiving device each have at least two or more transmitting and/or receiving elements which are operated in parallel.

6. Data transmission system according to one of the preceding claims, **characterized in that** the vehicle-side and the trackside transmitting and/or receiving device each have at least two or more transmitting and/or receiving elements, which are arranged such that they are opposite in pairs when the rail vehicle door is positioned in front of the platform protection door.

7. Rail vehicle (5) having a vehicle-side transmitter and/or receiving device (10), with the vehicle-side transmitting and/or receiving device having at least one vehicle-side transmitting and/or receiving element (20-26) which is fitted in the area of a rail vehicle door (30), **characterized in that** the vehicle-side transmitting and/or receiving device is fitted such that it is covered by the rail vehicle door, and is separated from the rail track, when the rail vehicle door is closed, and remains uncovered by the rail vehicle door when the latter is open.

8. Rail vehicle according to Claim 7, **characterized in that**
- the rail vehicle has a video monitoring system (35) which is connected to the vehicle-side transmitting and/or receiving device, produces video data (V) and temporarily stores this video data (V) and
- the vehicle-side transmitting and/or receiving device is designed such that, when stopped at a platform, it transmits the temporarily stored video data to a trackside transmitting and/or receiving device.

9. Arrangement having at least one trackside transmitting and/or receiving device (120) and having at least one platform protection door (100), **characterized in that** the trackside transmitting and/or receiving device has at least one trackside transmitting and/or receiving element (130-136) which is arranged relative to the platform protection door (100) such that it is covered by the platform protection door and is separated from the rail track when the platform protection door is closed, and remains uncovered by the platform protection door when the platform protection door is open.

10. Method for transmitting data from a rail vehicle to a trackside device and/or vice versa, **characterized in that**
- the rail vehicle is stopped at a platform such that at least one rail vehicle door is located in front of a platform protection door,
- at least one vehicle-side transmitting and/or receiving element, which is covered by the rail vehicle door when the latter is closed, is exposed by opening the rail vehicle door,
- at least one trackside transmitting and/or receiving element which is covered by the platform protection door when the latter is closed is exposed by opening the platform protection door, and
- data is transmitted unidirectionally or bidirectionally between the two exposed transmitting and/or receiving elements.

11. Method according to Claim 10, **characterized in that** video data (V) which is produced and temporarily stored is in the rail vehicle transmitted from the vehicle-side transmitting and/or receiving element to the trackside transmitting and/or receiving element.

## Revendications

1. Système de transmission de données comprenant
- un dispositif (120) d'émission et/ou de réception du côté de la ligne et
- un dispositif (10) d'émission et/ou de réception du côté du véhicule,
- dans lequel le dispositif d'émission et/ou de réception du côté du véhicule comporte au moins un élément (20 à 26) d'émission et/ou de réception du côté du véhicule qui est mis dans la zone d'une porte (30) de véhicule ferroviaire,
**caractérisé en ce que**
l'élément d'émission et/ou de réception du côté du véhicule est mis de manière à, dans l'état fermé de la porte du véhicule ferroviaire, en être recouvert et à être séparé de la ligne (110) et, lorsque la porte du véhicule ferroviaire est ouverte, à en rester non recouvert.

2. Système de transmission de données, notamment suivant la revendication 1, comprenant un type d'émission et/ou de réception du côté de la ligne et un dispositif d'émission et/ou de réception du côté du véhicule,
**caractérisé en ce que** les dispositifs (120) d'émission et/ou de réception du côté de la ligne comportent au moins un élément (130 à 136) d'émission et/ou de réception du côté de la ligne qui est disposé dans la zone d'une porte (100) de protection de quai de manière à, lorsque la porte de protection de quai est fermée, à en être recouvert et à être séparé de la ligne (110) et, lorsque la porte de protection de quai est ouverte, à rester non recouverte par la porte de protection de quai.

3. Système de transmission de données suivant la revendication 2, **caractérisé en ce que** l'élément d'émission et/ou de réception du côté de la ligne et l'élément d'émission et/ou de réception du côté du véhicule sont disposés de manière à ce que, lors d'un positionnement de la porte du véhicule ferroviaire devant la porte de protection du quai, une transmission de données soit possible entre les deux éléments d'émission et/ou de réception.

4. Système de transmission de données suivant l'une des revendications 2 ou 3, **caractérisé en ce que** l'élément d'émission et/ou de réception du côté de la ligne et l'élément d'émission et/ou de réception du côté du véhicule sont disposés de manière à ce que, lors d'un positionnement de la porte du véhicule ferroviaire devant la porte de protection du quai, les deux éléments d'émission et/ou de réception se font face.

5. Système de transmission de données suivant l'une des revendications précédentes, **caractérisé en ce que** le dispositif et/ou de réception du côté du véhicule et le dispositif d'émission et/ou de réception du côté du quai ont au moins respectivement deux ou plusieurs éléments d'émission et/ou de réception qui fonctionnent en parallèle.

6. Système de transmission de données suivant l'une des revendications précédentes, **caractérisé en ce que** le dispositif d'émission et/ou de réception du côté du véhicule et le dispositif d'émission et/ou de réception du côté de la ligne ont au moins respectivement deux ou plusieurs éléments d'émission et/ou de réception, qui sont disposés de manière à, lors d'un positionnement de la porte du véhicule ferroviaire devant la porte de protection du quai, être opposées paire par paire.

7. Véhicule (5) ferroviaire ayant un dispositif (10) d'émission et/ou de réception du côté du véhicule, le dispositif d'émission et/ou de réception du côté du véhicule ayant au moins un élément (20 à 26) d'émission et/ou de réception du côté du véhicule, qui est mis dans la zone d'une porte (30) du véhicule ferroviaire, **caractérisé en ce que** l'élément d'émission et/ou de réception du côté du véhicule est mis de manière, à l'état fermé de la porte du véhicule ferroviaire, en être recouvert et à être séparé de la ligne et, lorsque la porte du véhicule ferroviaire est ouverte, à en rester non recouvert.

8. Véhicule ferroviaire suivant la revendication 7, **caractérisé en ce que**
- le véhicule ferroviaire comporte un système (35) d'observation vidéo relié au dispositif d'émission et/ou de réception du côté du véhicule, qui produit des données (V) vidéo et qui les mémorise intermédiairement, et
- le dispositif d'émission et/ou de réception du côté du véhicule est tel qu'il transmet, lors d'un arrêt sur un quai, les données vidéos mémorisées intermédiairement à un dispositif d'émission et/ou de réception du côté de la ligne.

9. Agencement d'au moins un dispositif (120) d'émission et/ou de réception du côté de la ligne et ayant au moins une porte (10) de protection du quai,
**caractérisé en ce que**
le dispositif d'émission et/ou de réception du côté de la ligne a au moins un élément (130 à 136) d'émission et/ou de réception du côté de la ligne, qui est disposé par rapport à la porte (100) de protection du quai de manière à, lorsque la porte (10) de protection du quai est fermée, en être découvert et à être séparé de la ligne et, lorsque la porte de protection du quai est ouverte, rester non recouvert par la porte de protection du quai.

10. Procédé de transmission de données d'un véhicule ferroviaire à un dispositif du côté de la ligne et/ou inversement,
**caractérisé en ce que**
- on arrête le véhicule ferroviaire sur un quai de manière à ce qu'au moins une porte de véhicule ferroviaire se trouve devant une porte de protection du quai,
- on libère en ouvrant la porte du véhicule ferroviaire au moins un élément d'émission et/ou de réception du côté du véhicule recouvert par la porte du véhicule ferroviaire lorsqu'elle est fermée,
- on libère en ouvrant la porte de protection du quai au moins un élément d'émission et/ou de réception du côté de la ligne recouvert par la porte de protection du quai lorsqu'elle est fermée et
- on transmet unidirectionnellement ou bidirectionnellement des données entre les deux éléments d'émission et/ou de réception libérés.

11. Procédé suivant la revendication 10,
**caractérisé en ce que** l'on transmet des données (V) vidéo produites dans le véhicule ferroviaire et mémorisées intermédiairement par l'élément d'émission et/ou de réception du côté du véhicule à l'élément d'émission et/ou de réception du côté de la ligne.
